# EUROPEAN PATENT SPECIFICATION

(11) **EP 1 421 816 B1**
(45) Date of publication and mention of the grant of the patent: **17.12.2008**
(21) Application number: 02755047.4
(22) Date of filing: 28.08.2002
(51) Int. Cl.: H04Q 7/38, H04Q 7/22

(54) **MONITORING A SUBSCRIBER**
ÜBERWACHUNG EINES TEILNEHMERS
CONTROLE D'ABONNE

(30) Priority: 29.08.2001 FI 20011726
(43) Date of publication of application: 26.05.2004
(73) Proprietor: EADS Secure Networks Oy, 00380 Helsinki (FI)
(72) Inventor: PALTEMAA, Ilpo, FIN-02130 Espoo (FI); MYYRY, Matti, FIN-33900 Tampere (FI)
(74) Representative: Äkräs, Tapio Juhani
(86) International application number: PCT/FI2002/000698
(87) International publication number: WO 2003/019968

(56) References cited:
- US-A- 6 141 347
- US-A1- 2001 030 623
- US-A1- 2001 044 309

## Description

### FIELD OF THE INVENTION

The invention relates to monitoring a subscriber in a telecommunication network, and particularly to distributing monitored event information in a mobile communication network, A mobile communication network is used for generally referring to any mobile communication network based on a telecommunication system which enables wireless communication while users move in the service area of the system. Typical mobile communication networks include a Public Land Mobile Network (PLMN) and dedicated networks (Professional Mobile Radio, PMR).

### BACKGROUND OF THE INVENTION

The amount and importance of supplementary services provided via telecommunication systems, particularly via mobile communication systems, are constantly increasing. Such supplementary services include e.g. services utilizing location information on a mobile station, such as assignment of a task to a closest available unit. At least some of these services are based on monitoring a mobile station and transmitting information on an event associated with the mobile station to be monitored to all monitors, i.e. all persons and/or applications interested in the location or a change in the location of the mobile station. Conventionally, monitoring is arranged in mobile communication networks such that event information on a subscriber to be monitored is transmitted to a centralized server, which then takes care of forwarding the event information to all monitors.

A problem with the above-described system is that when the amount of monitoring information produced by the mobile communication networks increases, a centralized server easily becomes a bottleneck even if the server is a well-secured server having a high capacity. US 6141347 discloses a multicast router which cast track the existence of multicast group member on local network and coupled to the multicast router, the multicast router further supporting forwarding data across a network of routers.

### BRIEF DESCRIPTION OF THE INVENTlON

An object of the invention is thus to provide a method and an apparatus implementing the method so as to enable the above-mentioned problem to be solved. The object of the invention is achieved by a method, system, and network nodes which are characterized, by what is disclosed in the independent claims. Preferred embodiments of the invention are disclosed in the dependent claims.

The idea underlying the invention is that a multicast router or a corresponding functionality is added to a mobile communication network in order to distribute monitoring information. A monitoring address, which is of a multicast group address type, is allocated to a mobile station to be monitored. For the mobile station to be monitored, this address is provided with a multicast group in order for those interested in the event information associated with the mobile station to register as members of the group. A multicast router functionality distributes the event information to be monitored to the members of the group.

An advantage of the invention is that simple multicast routers enable the information to be monitored to be efficiently distributed to all those interested, without complex servers. A further advantage is that the monitoring information processing capacity can be easily increased by only adding multicast routers to a network.

### BRIEF DESCRIPTION OF THE DRAWINGS

The invention is now described in closer detail in connection with the preferred embodiments and with reference to the accompanying drawings, in which

Figure 1 illustrates network elements of a system in accordance with a first preferred embodiment of the invention;

Figure 2 is a flow diagram showing the operation of a home location register in the first preferred embodiment of the invention;

Figure 3 is a flow diagram showing the operation of a monitor when the monitor starts monitoring in the first preferred embodiment of the invention;

Figure 4 shows delivery of event information in accordance with the invention, and

Figure 5 shows signalling according to the first preferred embodiment of the invention.

### DETAILED DESCRIPTION OF THE INVENTION

In the following, the invention will be described by way of example by using a system according to the TErrestrial Trunked Radio (TETRA) standard specified by the European Telecommunications Standards Institute (ETSI) as an exemplary system without, however, restricting the invention to such a specific system. The present invention can be applied in connection with any telecommunication system wherein one subscriber/terminal equipment can be simultaneously monitored by a group of monitors. Such systems include e.g. the pan-European GSM system including its derivatives and particularly its next generation, a system called GSM 2+, and mobile communication systems being developed, such as a third generation Universal Mobile Telephone System (UMTS) and systems based thereon. The invention can also be applied to fixed networks wherein terminal equipment connected to an IP network includes the functionalities of a Home Location Register (HLR) and a Visitor Location Register (VLR) to be described below. An example of such a network is a local area office network including personal computers connected thereto.

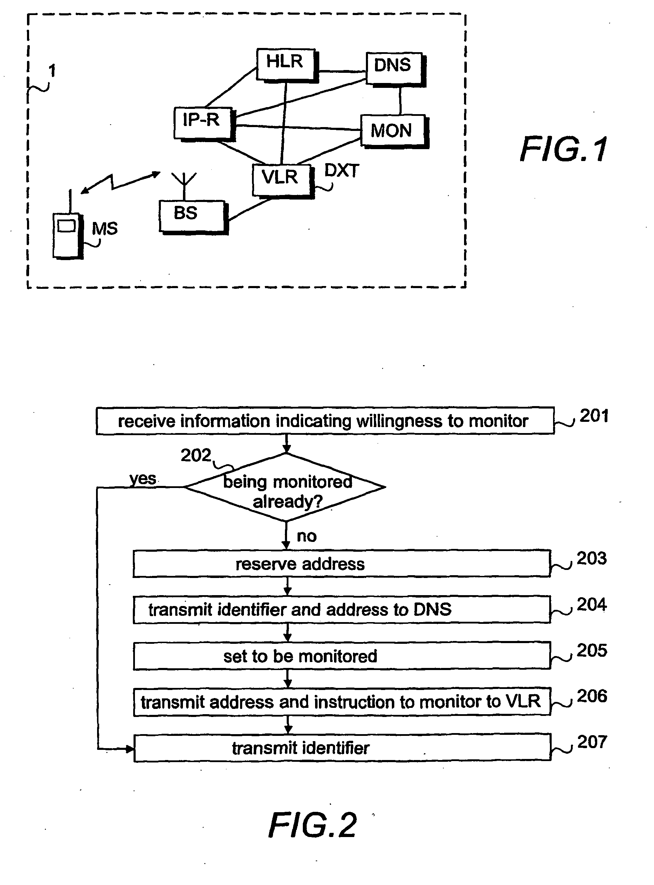

Figure 1 shows an example of the structure of a telecommunication system 1 according to the TETRA standard. Since the internal structure of a switching and management infrastructure has not been specified in the TETRA standard, only one exemplary solution will be disclosed herein at a very general level.

In the TETRA system 1, a Mobile Station (MS) is connected to a Base Station (BS) via a radio interface. Each base station BS is connected to one of the Digital Exchanges for TETRA (DXT) of a fixed transmission network. Using a fixed connection, the TETRA exchanges DXT are connected to other exchanges and to a TETRA nodal exchange (Digital Central Exchange for TETRA), which is an exchange to which other exchanges DXT and/or other nodal exchanges have been connected in order to provide alternative traffic routes. No nodal exchange is shown in Figure 1.

In order to manage subscriber mobility and in order to obtain necessary subscriber information fast enough, different databases are maintained in the system 1 to be used by the exchange serving a subscriber's mobile station, such databases being called a subscriber information register. Subscriber information on all subscribers in a network are stored permanently or semi-permanently in a home location register HLR. The home location register includes e.g. information about whether or not a subscriber is being monitored. The home location register of the invention will be described in more detail below, particularly in connection with Figure 2. A visitor location register VLR is a database of another type which, on a temporary basis, includes subscriber information on a mobile station MS within its area. The visitor location register is usually connected to one exchange, but it may also serve several exchanges. Each register may be a separate network node of its own, a register decentralized into exchanges DXT or nodal exchanges, or a register integrated in one of these in a centralized manner. The way in which the registers are implemented is irrelevant to the invention. In the example of Figure 1, the visitor location register VLR is integrated in the exchange DXT while the home location register HLR is a separate network node of its own.

Within the scope of the present application, a mobile station MS is used for referring to an integrated whole constituted by subscriber identification information, e.g. a detachably connectable identification unit, and the actual terminal equipment. Within the scope of the present invention, a mobile station can thus be directly equated with a unit to be monitored, whether it be the actual subscriber, such as a doctor, identified on the basis of the identification unit, or the actual terminal equipment, e.g. terminal equipment fixedly installed in an ambulance, identifiable on the basis of the identifier of the terminal equipment, such as a TETRA Equipment Identifier (TEI). The information on the terminal equipment may be located in the network in a separate register or it may have been integrated e.g. in an LR.

The system 1 also comprises monitoring terminal equipment and/or applications MON, which will be called a monitor below. A monitor may be e.g. a dispatcher or an application operating in the terminal equipment of a dispatcher.

The system 1 of the invention also comprises network nodes IP-R including a multicast router functionality, which will be called a multicast router below. A multicast router takes care of the monitors becoming registered as users of the monitoring address of the mobile station to be monitored and the information to be monitored being delivered to the monitors. A monitoring address is an address of the multicast-group-address type. In a first preferred embodiment of the invention, the multicast router is a router based on Internet Protocol (IP) technology. One of its advantages is that it knows all possible multicast group addresses since they have been permanently reserved from an IP address space. Multicast groups thus always exist, so it is unnecessary to set them up separately for a multicast router. A default value for such a multicast group is that it is empty.

The system according to the first preferred embodiment of the invention further comprises a combined domain name and address server DNS for alleviating management of monitoring addresses and for converting a monitoring identifier into a corresponding monitoring address. In a preferred embodiment of the invention, one or more monitoring identifiers are reserved from the name server for the monitoring address e.g. according to the purpose of use. In other preferred embodiments of the invention, no name and/or address server is necessarily needed.

A TETRA transmission network also includes open interfaces and peripheral devices that are not shown in the figure. These include e.g. an interface between two TETRA networks, an interface between devices connected to a network by a fixed connection and an exchange, external interfaces to other networks, such as a public switched telephone network (PSTN), and network management systems including their interfaces.

The network nodes of the TETRA network shown in Figure 1 are usually connected together through a signalling network SS7. The invention is not, however, restricted to a network or signalling of this type but also other networks and signallings, such as e.g. an ATM or the IP, may be used. The IP is used between an IP router and network nodes as well as between a DNS and network nodes.

The telecommunication system implementing the functionality of the present invention comprises, in addition to the means necessary for implementing prior art services, means for implementing a multicast functionality. More precisely, the telecommunication system comprises means for generating a multicast group for the mobile station to be monitored, for maintaining such a multicast group and for routing the event information to be monitored according to the multicast functionality. The system may further comprise means for reserving and managing multicast group addresses and/or monitoring identifiers. Existing network nodes include processors and memory, which can be utilized in the functions of the invention. All changes necessary for implementing the invention can be carried out as routines that can be implemented as added or updated software routines, by application circuits (ASIC) and/or programmable circuits, such as EPLD, FPGA. A single routine can be distributed to several network nodes and, correspondingly, a network node may include several routines and/or parts of a routine or routines.

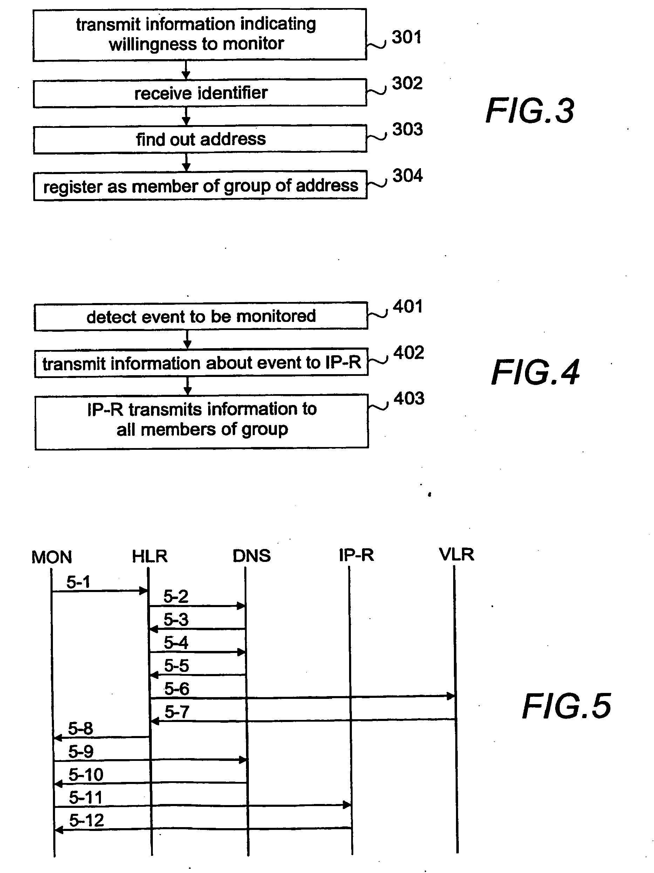

Figures 2 to 4 are flow diagrams showing the first preferred embodiment of the invention. Figure 2 shows the operation of a home location register HLR, Figure 3 shows the operation of a monitor, and Figure 4 shows delivery of event information. It is, for the sake of clarity, assumed in the figures that it is a subscriber who is being monitored and that the monitor is a person. In the first preferred embodiment of the invention, it is assumed that the monitoring identifier of the subscriber is fixed, i.e. always the same, standard-form and stored in the subscriber information on the mobile station whereas the actual address is allocated each time the monitoring of the mobile station begins. A fixed, standard-form monitoring identifier may be e.g. of the form MON the mobile station number of the subscriber, such as MON_123456. In the first preferred embodiment of the invention, the actual monitoring address is an IP address according to Internet technology.

Referring to Figure 2, at point 201 the HLR receives, from the monitor, information indicating that the monitor wishes to start monitoring mobile station A. At point 202, the HLR checks from the subscriber information on the mobile station whether or not mobile station A is already being monitored. If not, at point 203 the HLR reserves a monitoring address from a router. Having received it, at point 204 the HLR transmits the monitoring address and a monitoring identifier to a name server. Furthermore, at point 205 the HLR adds information indicating that the mobile station is being monitored to the subscriber information on the mobile station. At point 206, the HLR transmits the monitoring address and information indicating that mobile station A is being monitored to the VLR. At point 207, the HLR also transmits the monitoring identifier to the monitor.

If the mobile station is already being monitored (point 202), at point 207 the HLR transmits the monitoring identifier to the monitor.

The fact that the monitoring address is transmitted to the VLR, whereas the monitoring identifier, at least a part thereof having already been stored in the subscriber information on the mobile station, is transmitted to the monitor enables, in the first preferred embodiment of the invention, the advantage to be achieved that no need exists for the HLR to store the address information or the identification information in any step of the above-described process.

In a preferred embodiment of the invention, the HLR stores the monitoring address in the subscriber information on the mobile station for as long as the mobile station is being monitored. In this embodiment, the HLR transmits the monitoring address also to the monitor at point 207.

In a preferred embodiment of the invention, the home location register HLR returns the monitoring address at point 207 although it has not been stored in the subscriber information. In this embodiment, the HLR finds out, from the name server, the address corresponding to the identifier if the mobile station is already being monitored.

In a preferred embodiment of the invention, a fixed monitoring address has been stored in the subscriber information for the subscriber, in other words the monitoring address to be used is always the same and it is not allocated separately when monitoring begins. In this embodiment, points 203 and 204 are ignored and the monitoring address is transmitted at point 207. Depending on whether or not the monitoring address is among the subscriber information to be transferred to the VLR, either information to indicate the beginning of monitoring alone or the monitoring address as well will be transmitted at point 206.

In a preferred embodiment of the invention, it is the monitoring identifier that is transmitted to the visitor location register VLR. In this embodiment, the VLR has to find out, from the DNS, the address corresponding with the identifier. An advantage of this embodiment is that the address can be dynamic.

In a preferred embodiment of the invention, both the monitor ing address and the monitoring identifier are transmitted to the visitor location register VLR. In this embodiment, the VLR may later check from the DNS whether or not the address has changed.

In some preferred embodiments of the invention, only one monitoring address is reserved to the mobile station but one or more monitoring identifiers can be reserved for the address, the HLR then, depending on the embodiment, either temporarily stores the monitoring identifier(s) in its memory or only delivers the monitoring identifier(s) to the monitor and updates the same on the name server.

Referring to Figure 3, when the monitor wishes to monitor a particular mobile station, at point 301 he or she transmits information to the HLR to indicate that he or she wishes to monitor mobile station A. After receiving the monitoring identifier at point 302, at point 303 the monitor finds out, from the name server, the monitoring address corresponding with the identifier and at point 304 registers as a member of the group indicated by the monitoring address onto an IP router, preferably according to an Internet Group Management Protocol (IGMP) by using the monitoring address as the address. The router acknowledges, monitoring starts and the monitor receives the monitored event information. Information on the monitor and the mobile station to be monitored is thus updated on the multicast router, not on a separate server.

Referring to Figure 4, when an event to be monitored associated with mobile station A to be monitored is detected in the visitor location register (point 401), the VLR transmits (point 402) information about the event to the IP router such that the address of the information is the monitoring address. A typical event to be monitored occurs when a mobile station e.g. changes locations or groups. Depending on the embodiment, the events to be monitored may be the same for all mobile stations, comprise a mobile-station-specific subgroup of the events to be monitored, or consist of a combination of the two. A mobile-station-specific subgroup is maintained in the subscriber information and it is either transferred together with the rest of the subscriber information to the visitor location register VLR, or a mobile-station-specific subgroup of the events to be monitored is transferred when monitoring of the mobile station starts.

The IP router then takes care of that all monitors registered in the group of the monitoring address receive the event information (point 403). The way in which multicast is implemented is irrelevant to the invention. The point is that all members of the group receive the event information. In IP technology, for instance at least two different ways mastered by those skilled in the art exist to implement multicast; they will not, however, be described in closer detail herein. Further information on the IP multicast can be obtained e.g. on the web pages at www.ipmulticast.com, maintained by a Multicast Initiative (IPMI) forum.

The points shown above in connection with Figures 2, 3 and 4 are in no absolute chronological order, and some of the points can be executed simultaneously or in an order different from the order shown. Other functions may also be carried out between the points, such as in Figure 2 wherein the name server is asked for the monitoring identifier in embodiments wherein no fixed monitoring identifier is used. Some points may also be ignored, such as point 303 in Figure 3 in an embodiment wherein the monitor receives the monitoring address from the home location register.

Figure 5 shows signalling in accordance with the first preferred embodiment when the mobile station is not yet monitored.

A monitor MON sets new monitoring for mobile station A, i.e. transmits information to the home location register HLR in a message 5-1 to indicate that the monitor wishes to start monitoring mobile station A. The home location register HLR checks from its information whether or not the mobile station is being monitored. Since in this example the mobile station is not monitored, the HLR uses a message 5-2 to ask the name server DNS to reserve an address. In the present example, the name server DNS also includes a multicast group address reservation server, which can be asked to reserve a multicast group address, using e.g. a Multicast Address Dynamic Client Allocation Protocol (MADCAP). The name server DNS reserves the address and transmits the address to the home location register HLR in a message 5-3. Using a message 5-4, the home location register transmits the address and the corresponding monitoring identifiers to the name server DNS, which stores them in its memory and acknowledges the reception by means of a message 5-5. In a message 5-6, the HLR transmits the address and an instruction to start monitoring mobile station A to the visitor location register VLR. The visitor location register VLR adds information about the monitoring and the address to which the information on the events to be monitored is to be transmitted to the subscriber information and acknowledges the message 5-6 by means of a message 5-7. The home location register HLR also transmits the monitoring identifier of mobile station A to the monitor MON in a message 5-8. After receiving it, the monitor MON uses a message 5-9 to ask for the address corresponding with the identifier from the name server DNS, which transmits the address in a message 5-10. After receiving the address, the monitor MON registers as a member of the group of the address by transmitting a message 5-11 to a multicast router IP-R. After receiving the message 5-11, the multicast router IP-R adds the monitor as a member of the group of the address and acknowledges the registration by transmitting a message 5-12.

If the mobile station is already being monitored, in the first preferred embodiment of the invention, the home location register HLR, after receiving a message 5-1, transmits a message 5-8 to the monitor MON, whereafter the process proceeds as described above.

In a preferred embodiment of the invention wherein a fixed monitoring address known to the monitor is used, the monitor transmits a message 5-1 when the monitor wishes to start monitoring. A message 5-1 may include a monitoring address, particularly if it has not been stored in the subscriber information. After receiving the message 5-1, the HLR transmits an acknowledgement of it to the monitor, and a message 5-6 which is acknowledged by the VLR. The monitor registers as a member of the group by transmitting a message 5-11, which is acknowledged by the multicast router by means of a message 5-12.

In a preferred embodiment of the invention, a message 5-2 includes a monitoring identifier, and the DNS stores it and the address it reserved in its memory before transmitting a message 5-3. In this embodiment, no messages 5-4 and 5-5 will be transmitted.

In an embodiment wherein the HLR also finds out the monitoring address for a mobile station already being monitored, either the above-described signalling is carried out between the messages 5-1 and 5-8 or the home location register HLR finds out the address corresponding with the identifier from the name server and transmits the address in a message 5-8.

In the embodiments of the invention wherein a monitoring address is transmitted in the message 5-8, the monitor MON does not need to find out the address, so no messages 5-9 and 5-10 will be transmitted.

When the monitor stops monitoring, information associated with the monitoring can be updated e.g. according to the prior art by using the IGMP between the monitor and the multicast router, and a Multicast Source Notification of Interest Protocol (MSNIP) between the multicast router and the visitor location register/home location register. If even the last monitor of the mobile station stops monitoring (e.g. the HLR may find out the size of a group from the multicast router upon receiving information about the monitor stopping the monitoring), the reserved address is released in the embodiments wherein separately reservable addresses are used.

The signalling messages disclosed above in connection with Figure 5 are only suggestive and they may include even several separate messages in order to deliver the same information. Also other messages, e.g. messages associated with call setup, may be transmitted between the messages. Furthermore, the messages may also include other information and/or the order in which they are transmitted may deviate from that disclosed above. Depending on the operator and the system, other network elements into which different functionalities have been distributed may also participate in the signalling and delivery of information.

Although the operation in accordance with the first preferred embodiment of the invention has been disclosed above assuming that it is a subscriber that is being monitored, the way in which the invention is applied in connection with monitoring terminal equipment is obvious to one skilled in the art. Which one is to be monitored can be concluded e.g. from the identifier located in the request: is it an identifier of terminal equipment or an identifier associated with a subscriber, e.g. a subscriber identifier ITSI or a subscriber telephone number MSISDN.

The invention may also be applied to embodiments wherein the problem of a changing address and/or the implementation of a multicast has been solved in a different manner to that shown above.

It is obvious to one skilled in the art that as technology advances, the basic idea of the invention can be implemented in many different ways. The invention and its embodiments are thus not restricted to the above examples but they may vary within the scope of the claims.

## Claims

1. A method for monitoring a mobile station in a telecommunication network, **characterized in that** the method comprises the following steps:
reserving (5-2) at least one multicast group address as a monitoring address for a mobile station to be monitored in order to deliver monitored event information, the multicast group address being provided with a multicast group;
registering (5-11) a monitor wishing to monitor the mobile station as a member of the multicast group provided with the multicast group address; and
transmitting the event information associated with the mobile station to be monitored to the members of the multicast group according to a multicast router functionality maintained for delivering monitored event information.

2. A method as claimed in claim 1, **characterized in that** the method further comprises the steps of:
reserving at least one monitoring identifier for the mobile station to be monitored;
maintaining at least one name server for converting the monitoring identifiers into a corresponding multicast group address; and
updating (5-4) the information on the name server in response to a new monitoring identifier-multicast group address pair.

3. A telecommunication system (1) comprising
a mobile station (MS) which may be monitored,
means for generating a multicast group, and
means for transmitting to the members of the multicast group,
**characterized in that**
the means for generating are configured to generate a multicast group for the mobile station (MS) in order to deliver monitored event information associated with the mobile station,
means for reserving a multicast group address as a monitoring address for a mobile station (MS) to be monitored which does not yet have a monitoring address,
means for registering a monitor (MON) wishing to monitor the mobile station as a member of the multicast group; and
the means for transmitting are configured to transmit monitored event information associated with the mobile station (MS) to the members (MON) of the multicast group according to a multicast functionality.

4. A telecommunication system as claimed in claim 3, **characterized in that** the system further comprises
means for storing the monitoring address at least for as long as the mobile station is being monitored.

5. A telecommunication system as claimed in claim 3,
**characterized in that**
the telecommunication system also comprises memory (DNS) for storing the multicast group address reserved as a monitoring address for the mobile station at least for as long as the mobile station is being monitored,
the monitor (MON) is configured to find out the monitoring address of the mobile station, and
a router (IP-R) including the multicast functionality and containing the means for transmitting is configured to maintain the multicast group of the monitoring address, the multicast group including monitors monitoring the mobile station, and to transmit the monitored event information to the members of the multicast group.

6. A telecommunication system as claimed in claim 5, **characterized in that** it further comprises
a register (HLR) maintaining subscriber information on the mobile station, the register being configured to reserve the monitoring address for the mobile station in response to a notification received from the monitor to indicate a willingness to monitor.

7. A telecommunication system as claimed in claim 6, **characterized in that** the register (HLR) is further configured to maintain information about whether or not the mobile station is being monitored, and to reserve a monitoring address only for a mobile station which is not already being monitored.

8. A telecommunication system as claimed in claim 5, 6 or 7,
**characterized in that**
at least some of the events to be monitored may be mobile station-specifically specified in the subscriber information to be maintained in the telecommunication system, and
the telecommunication system further comprises one network node (VLR) serving a subscriber, into which network node the mobile-station-specifically specified events to be monitored are copied at least for as long as the monitoring is being carried out and which network node is configured to detect the events to be monitored and to transmit the monitored event information to the monitoring address.

9. A telecommunication system as claimed in claim 5, 6, 7 or 8, **characterized in that** the telecommunication system is a network in accordance with a TETRA system.

10. A telecommunication system as claimed in claim 5, 6, 7, 8 or 9, **characterized in that** the multicast functionality of the router utilizes IP technology.

11. A network node (MON) of a telecommunication system, which is configured to operate as a monitor and which comprises means for indicating to the telecommunication system that the network node wishes to monitor a particular target in the telecommunication system,
**characterized in that** the network node (MON) further comprises
means for finding out a multicast group address reserved as a monitoring address for the target, and
means for registering as a member of a multicast group of the monitoring address.

12. A network node (MON) of a telecommunication system as claimed in claim 11, **characterized in that** the means for finding comprise:
means for receiving an acknowledgement from the telecommunication system in response to the indication of a willingness to monitor; and
means for finding out the monitoring address in response to the monitoring identifier of the target located in the acknowledgement.

13. A network node (HLR) in a telecommunication system, which comprises
subscriber information on at least one mobile station, and
means for receiving a notification to indicate a willingness to monitor the mobile station;
means for transmitting information
**characterized in that** the network node (HLR) further comprises
means for checking whether or not the mobile station is being monitored, and if not, for reserving at least one multicast group address as a monitoring address for the mobile station, and
the means for transmitting are configured to transmit the monitoring address to predetermined network nodes.

14. A network node (HLR) as claimed in claim 13, **characterized in that** the network node (HLR) further comprises
means for reserving a monitoring identifier for the mobile station;
means for updating a monitoring identifier-monitoring address pair on a name server; and
means for transmitting the monitoring identifier to predetermined network nodes.

15. A network node (HLR) as claimed in claim 13, **characterized in that** the network node (HLR) further comprises
means for generating a monitoring identifier for the mobile station in accordance with predetermined rules;
means for updating a monitoring identifier-monitoring address pair on a name server; and
means for transmitting the monitoring identifier to predetermined network nodes.

16. A network node as claimed in claim 13,
**characterized in that**
the means for checking are replaced by subscriber information including a monitoring address for the mobile station, the monitoring address being a multicast group address, and
the means for transmitting are configured to transmit the monitoring address in the subscriber information to predetermined network nodes in response to the reception of the notification to indicate a willingness to monitor.

## Patentansprüche

1. Überwachungsverfahren für eine Mobilstation in einem Telekommunikationsnetzwerk, **dadurch gekennzeichnet, dass** das Verfahren die folgenden Schritte umfasst:
Reservieren (5-2) wenigstens einer Multicast-Gruppen-Adresse als eine Überwachungsadresse für eine zu überwachende Mobilstation, um überwachte Ereignisinformationen zu liefern, wobei die Multicast-Gruppen-Adresse mit einer Mulücast-Gruppe versehen ist;
Registrieren (5-11) eines Überwachers, der wünscht, die Mobilstation zu überwachen, als ein Mitglied der mit der Mutticast-Gruppen-Adresse versehenen Mulücast-Gruppe; und
Übertragen der Ereignisinformationen, die der zu überwachenden Mobilstation zugeordnet sind, an die Mitglieder der Multicast-Gruppe gemäß einer Multicast-Router-Funktionalität, die unterhalten zur Auslieferung überwachter Ereignisinformationen wird.

2. Verfahren gemäß Anspruch 1, **dadurch gekennzeichnet, dass** das Verfahren weiter die Schritte aufweist:
Reservieren wenigstens einer Überwachungskennung für die zu überwachende Mobilstation;
Unterhalten wenigstens eines Name-Servers zum Konvertieren der Überwachungskennung in eine entsprechende Multicast-Gruppen-Adresse; und
Aktualisieren (5-4) der Informationen über den Name-Server als Antwort auf ein neues Paar aus Überwachungskennung und Multicast-Gruppen-Adresse.

3. Telekommunikationssystem 1 umfassend
eine Mobilstation (MS), die überwacht werden kann,
Mittel zum Erzeugen einer Multicast-Gruppe, und
Mittel zum Übertragen an die Mitglieder der Multicast-Gruppe,
**gekennzeichnet durch**,
die Mittel zum Erzeugen, die konfiguriert sind, eine Multicast-Gruppe für die Mobilstation (MS) zu erzeugen, um überwachte Ereignisinformationen, die der Mobilstation zugeordnet sind, zu liefern,
Mittel zum Reservieren einer Multicast-Gruppen-Adresse als eine Überwachungsadresse für eine zu überwachende Mobilstation (MS), die noch keine Überwachungsadresse hat,
Mittel zum Registrieren eines Überwachers (MON), der wünscht die Mobilstation zu überwachen, als ein Mitglied der Multicast-Gruppe; und
die Mittel zum Übertragen, die konfiguriert sind, überwachte Ereignisinformationen, die der Mobilstation (MS) zugeordnet sind, an die Mitglieder (MON) der Multicast-Gruppe gemäß einer Multicast-Funktionalität zu übertragen.

4. Telekommunikationssystem gemäß Anspruch 3, **dadurch gekennzeichnet, dass** das System weiter umfasst
Mittel zum Speichern der Überwachungsadresse wenigstens solange wie die Mobilstation, überwacht wird.

5. Telekommunikationssystem gemäß Anspruch 3,
**dadurch gekennzeichnet,**
**dass** das Telekommunikationssystem außerdem Speicher (DNS) umfasst zum Speichern der Multicast-Gruppen-Adresse, die als eine Überwachungsadresse für die Mobilstation, reserviert ist, wenigstens solange wie die Mobilstation überwacht wird,
**dass** der Überwachen (MON) konfiguriert ist, die Überwachungsadresse der Mobilstation herauszufinden, und
**dass** ein Router (IP-R), der die Multicast-Funktionalität enthält und die Mittel zum Übertragen beinhaltet, konfiguriert ist, die Multicast-Gruppe der Überwachungsadresse, die Multicast-Gruppe, welche die überwachen enthält, welche die Mobilstation überwachen, zu unterhalten und die überwachten Ereignisinformationen an die Mitglieder der Multicast-Gruppe zu übertragen.

6. Telekommunikationssystem gemäß Anspruch 5, **dadurch gekennzeichnet, dass** es weiter umfasst
ein Register (HLR), das Teilnehmerinformationen über die Mobilstation unterhält, wobei das Register konfiguriert ist, die Überwachungsadresse für die Mobilstation als Antwort auf eine Benachrichtigung, die von dem Überwacher empfangen wurde, um eine Absicht zu überwachen anzuzeigen, zu reservieren.

7. Telekommunikationssystem gemäß Anspruch 6, **dadurch gekennzeichnet, dass** das Register (HLR) weiter konfiguriert ist, Informationen darüber zu unterhalten, ob die Mobilstation überwacht wird oder nicht, und eine Überwachungsadresse nur für eine Mobilstation zu reservieren, die nicht bereits überwacht wird.

8. Telekommunikationssystem gemäß Anspruch 5, 6 oder 7, **dadurch gekennzeichnet,**
**dass** wenigstens eines der zu überwachende Ereignisse Mobilstations-spezifisch in den Teilnehmerinformationen, die in dem Telekommunikationssystem zu unterhalten sind, bestimmt sein kann, und
**dass** das Telekommunikationssystem weiter einen Netzwerkknoten (VLR) umfasst, der einen Teilnehmer bedient, wobei in diesem Netzwerkknoten die Mobilstations-spezifisch bestimmten, zu überwachenden Ereignisse wenigstens für solange wie die Überwachung ausgeführt wird kopiert werden und wobei der Netzwerkknoten konfiguriert ist, die zu überwachenden Ereignisse zu erfassen und die überwachten Ereignisinformationen an die Überwachungsadresse zu übertragen.

9. Telekommunikationssystem gemäß Anspruch 5, 6, 7 oder 8, **dadurch gekennzeichnet, dass** das Telekommunikationssystem ein Netzwerk gemäß einem TETRA-System ist.

10. Telekommunikationssystem gemäß Anspruch 5, 6, 7, 8 oder 9, **dadurch gekennzeichnet, dass** die Multicast-Funktionalität des Routers IP-Technologie verwendet

11. Netzwerkknoten (MON) eines Telekommunikationssystems, der konfiguriert ist, als ein Überwacher zu arbeiten, und der Mittel umfasst, zum Anzeigen dem Telekommunikationssystem, dass der Netzwerkknoten wünscht, ein bestimmtes Ziel in dem Telekommunikationssystem zu überwachen,
**dadurch gekennzeichnet, dass** der Netzwerkknoten (MON) weiter umfasst
Mittel zum Herausfinden einer Multicast-Gruppen-Adresse, die als eine Überwachungsadresse für das Ziel reserviert ist, und
Mittel zum Registrieren als ein Mitglied der Multicast-Gruppe der Überwachungsadresse.

12. Netzwerkknoten (MON) eines Telekommunikationssystems gemäß Anspruch 11, **dadurch gekennzeichnet, dass** die Mittel zum Herausfinden umfassen:
Mittel zum Empfangen einer Bestätigung von dem Tefekomrnunikationssystem als Antwort auf die Anzeige einer Absicht zu überwachen; und
Mittel zum Herausfinden der lJberwachungsadresse als Antwort auf die Anzeige einer Absicht zu überwachen; und
Mittel zum Herausfinden der Überwachungsadresse als Antwort auf die Überwachungskennung des Ziels, dass sich in der Bestätigung befindet.

13. Netzwerkknoten (HLR) in einem Telekommunikationssystem, der umfasst Teilnehmerinformationen über wenigstens eine Mobilstation, und
Mittel zum Empfangen einer Benachrichtigung, um eine Absicht anzuzeigen, die Mobilstation, zu überwachen;
Mittel zum Übertragen von Informationen
**dadurch gekennzeichnet, dass** der Netzwerkknoten (HLR) weiter umfasst Mittel zum Überprüfen, ob die Mobilstation überwacht wird oder nicht, und wenn nicht, zum Reservieren wenigstens einer Multicast-Gruppen-Adresse als eine Überwachungsadresse für die Mobilstation, und
dass die Mittel zum Übertragen konfiguriert sind, die Überwachungsadresse an vorbestimmte Netzwerkknoten zu übertragen.

14. Netzwerkknoten (HLR) gemäß Anspruch 13, **dadurch gekennzeichnet, dass** der Netzwerkknoten (HLR) weiter umfasst
Mittel zum Reservieren einer Überwachungskennung für die Mobilstation; Mittel zum Aktualisieren eines Paares aus Überwachungskennung und Überwachungsadresse auf einem Name-Server; und
Mittel zum Übertragen der Überwachungskennung an vorbestimmte Netzwerkknoten.

15. Netzwerkknoten (HLR) gemäß Anspruch 13, **dadurch gekennzeichnet, dass** der Netzwerkknoten (HLR) weiter umfasst
Mittel zum Erzeugen einer Überwachungskennung für die Mobilstation gemäß vorbestimmter Regeln;
Mittel zum Aktualisieren eines Paares aus Überwachungskennung und Überwachungsadresse auf einem Name-Server; und
Mittel zum Übertragen der Überwachungskennung an vorbestimmte Netzwerkknoten.

16. Netzwerkknoten gemäß Anspruch 13, **dadurch gekennzeichnet,**
**dass** die Mittel zum Überprüfen ersetzt werden durch Teilnehmerinformationen, die eine Überwachungsadresse für die Mobilstation enthalten, wobei die Überwachungsadresse eine Multicast-Gruppen-Adresse ist, und
**dass** die Mittel zum Übertragen konfiguriert sind, die Überwachungsadresse in den Teilnehmerinformationen an vorbestimmte Netzwerkknoten als Antwort auf den Empfang der Benachrichtigung, um eine Absicht zu überwachen anzuzeigen, zu übertragen.

## Revendications

1. Procédé de surveillance d'une station mobile dans un réseau de télécommunication, **caractérisé en ce que** le procédé comprend les étapes consistants à :
réserver (5-2) au moins une adresse de groupe de multidiffusion en tant qu'adresse de surveillance pour une station mobile devant être surveillée afin de distribuer les informations d'événements surveillés, l'adresse de groupe de multidiffusion étant munie d'un groupe de multidiffusion ;
enregistrer (5-11) un dispositif de surveillance souhaitant surveiller la station mobile en tant qu'un membre du groupe de multidiffusion muni de l'adresse de groupe de multidiffusion ; et
transmettre les informatisons d'événement associées à la station mobile devant être surveillée aux membres du groupe de multidiffusion en fonction d'une fonctionnalité du routeur de multidiffusion gardée pour distribuer les informations d'événements surveillés.

2. Procédé selon la revendication 1, **caractérisé en ce que** le procédé comprend en outre les étapes consistant à :
réserver au moins un identifiant de surveillance pour que la station mobile soit surveillée ;
garder au moins un serveur de noms pour convertir l'identifiant de surveillance en une adresse de groupe de multidiffusion correspondante ; et
mettre à jour (5-4) les informations sur le serveur de noms en réponse à une nouvelle paire d'adresses de groupe de multidiffusion de l'identifiant de surveillance.

3. Système de télécommunication (1) comprenant
une station mobile (MS) qui peut être surveillée,
des moyens pour générer un groupe de multidiffusion, et
des moyens pour transmettre aux membres du groupe de multidiffusion,
**caractérisé en ce que**
les moyens pour générer sont configurés pour générer un groupe de multidiffusion pour la station mobile (MS) afin de distribuer les informatisons d'événements surveillés associées à la station mobile,
des moyens pour réserver une adresse de groupe de multidiffusion en tant qu'adresse de surveillance pour une station mobile (MS), qui n'a pas encore d'adresse de surveillance,
des moyens pour enregistrer un dispositif de surveillance (MON) souhaitant surveiller la station mobile en tant qu'un membre du groupe de multidiffusion ; et
les moyens pour transmettre sont configurés pour transmettre les informations d'événements surveillés associées à la station mobile (MS) aux membres (MON) du groupe de multidiffusion en fonction d'une fonctionnalisé de multidiffusion.

4. Système de télécommunication selon la revendication 3, **caractérisé en ce que** le système comprend en outre
des moyens pour stocker l'adresse de surveillance au moins aussi longtemps que la station mobile est surveillée.

5. Système de télécommunication selon la revendication 3,
**caractérisé en ce que**
le système de télécommunication comprend également une mémoire (DNS) pour stocker l'adresse de groupe de multidifusion réservée en tant qu'adresse de surveillance pour la station mobile au moins aussi longtemps que la station mobile est surveillée,
le dispositif de surveillance (MON) est configuré pour découvrir l'adresse de surveillance de la station mobile, et
un routeur (IP-R) comprenant la fonctionnalité de multidiffusion et contenant les moyens pour transmettre est configuré pour garder le groupe de multidiffusion de l'adresse de surveillance, le groupe de multidiffusion comprenant les dispositifs de surveillance surveillant la station mobile, et pour transmettre les informations d'événements surveillés aux membres du groupe de multidiffusion.

6. Système de télécommunication selon la revendication 5, **caractérisé en ce qu'**il comprend en outre
un registre (HLR) gardant les informations d'abonné sur la station mobile, le registre étant configuré pour réserver l'adresse de surveillance pour la station mobile en réponse à une notification reçue du dispositif de surveillance pour indiquer une volonté de surveiller.

7. Système de télécommunication selon la revendication 6, **caractérisé en ce que** le registre (HLR) est en outre configuré pour garder les informations vérifiant si la station mobile est surveillée ou non, et pour réserver une adresse de surveillance seulement pour une station mobile qui n'est pas déjà surveillée.

8. Système de télécommunication selon la revendication 5, 6 ou 7,
**caractérisé en ce que**
au moins certains des événements devant être surveillés peuvent être spécifiés spécifiquement dans la station mobile dans les informations d'abonné devant être gardées dans le système de télécommunication, et
le système de télécommunication comprend en outre un noeud de réseau (VLR) desservant un abonné, dans lequel noeud de réseau les événements spécifiés spécifiquement dans la station mobile devant être surveillés sont copiés au moins aussi longtemps que la surveillance est effectuée et lequel noeud de réseau est configuré pour détecter les événements devant être surveillés et pour transmettre les informations d'événements surveillés à l'adresse de surveillance.

9. Système de télécommunication selon la revendication 5, 6, 7 ou 8,
**caractérisé en ce que** le système de télécommunication est un réseau en conformité avec un système TETRA.

10. Système de télécommunication selon la revendication 5, 6, 7, 8 ou 9,
**caractérisé en ce que** la fonctionnalité de multidiffusion du routeur utilise la technologie IP.

11. Noeud de réseau (MON) d'un système de télécommunication, qui est configuré pour fonctionner en tant que dispositif de surveillance et qui comprend des moyens pour indiquer au système de télécommunication que le noeud de réseau souhaite surveiller une cible particulière dans le système de télécommunication,
**caractérisé en ce que** le noeud de réseau (MON) comprend en outre
des moyens pour découvrir une adresse de groupe de multidiffusion réservée en tant qu'adresse de surveillance pour la cible, et
des moyens pour enregistrer en tant qu'un membre d'un groupe de multidiffusion de l'adresse de surveillance.

12. Noeud de réseau (MON) d'un système de télécommunication selon la revendication 11, **caractérisé en ce que** les moyens pour découvrir comprennent
des moyens pour recevoir un accusé de réception du système de télécommunication en réponse à l'indication d'une volonté de surveiller ; et
des moyens pour découvrir l'adresse de surveillance en réponse à l'identifiant de surveillance de la cible situé dans l'accusé de réception.

13. Noeud de réseau (HLR) dans un système de télécommunication, qui comprend
des informations d'abonné sur au moins une station mobile, et
des moyens pour recevoir une notification pour indiquer une volonté de surveiller la station mobile ;
des moyens pour transmettre les informations
**caractérisé en ce que** le noeud de réseau (HLR) comprend en outre
des moyens pour vérifier si la station mobile est surveillée ou non, et si ce n'est pas le cas, pour réserver au moins une adresse de groupe de multidiffusion en tant qu'adresse de surveillance pour la station mobile, et
les moyens pour transmettre sont configurés pour transmettre l'adresse de surveillance aux noeuds de réseau prédéterminés.

14. Noeud de réseau (HLR) selon la revendication 13, **caractérisé en ce que** le noeud de réseau (HLR) comprend en outre
des moyens pour réserver un identifiant de surveillance pour la station mobile ;
des moyens pour mettre à jour une paire d'adresses de surveillance de l'identifiant de surveillance sur un serveur de noms ; et
des moyens pour transmettre l'identifiant de surveillance aux noeuds de réseau prédéterminés.

15. Noeud de réseau (HLR) selon la revendication 13, **caractérisé en ce que** le noeud de réseau (HLR) comprend en outre
des moyens pour générer un identifiant de surveillance pour la station mobile en conformité avec des règles prédéterminées ;
des moyens pour mettre à jour une paire d'adresses de surveillance de l'identifiant de surveillance sur un serveur de noms ; et
des moyens pour transmettre l'identifiant de surveillance aux noeuds de réseau prédéterminés.

16. Noeud de réseau selon la revendication 13,
**caractérisé en ce que**
les moyens pour surveiller sont remplacés par des informations d'abonné comprenant une adresse de surveillance pour la station mobile, l'adresse de surveillance étant une adresse de groupe de multidiffusion, et
les moyens pour transmettre sont configurés pour transmettre l'adresse de surveillance dans les informations d'abonné aux noeuds de réseau prédéterminés en réponse à la réception de la notification pour indiquer une volonté de surveiller.
